# EUROPÄISCHE PATENTSCHRIFT

(11) **EP 1 322 574 B1**
(45) Veröffentlichungstag und Bekanntmachung des Hinweises auf die Patenterteilung: **09.11.2005**
(21) Anmeldenummer: 01985249.0
(22) Anmeldetag: 19.09.2001
(51) Int. Cl.: C07B 63/00, C08G 18/38

(54) **VERFAHREN ZUR ENTFERNUNG VON GELÖSTEN METALLEN AUS ORGANISCHEN FLÜSSIGKEITEN UND DAFÜR GEEIGNETES REINIGUNGSMITTEL**
METHOD FOR REMOVING DISSOLVED METALS FROM ORGANIC FLUIDS AND CLEANING AGENT SUITED THEREFOR
PROCEDE POUR ELIMINER DES METAUX DISSOUS DE LIQUIDES ORGANIQUES ET NETTOYANT APPROPRIE

(30) Priorität: 20.09.2000 DE 10046612
(43) Veröffentlichungstag der Anmeldung: 02.07.2003
(73) Patentinhaber: BASF Aktiengesellschaft, 67056 Ludwigshafen (DE)
(72) Erfinder: REICHELT, Michael, 01945 Ruhland (DE); ROTERMUND, Udo, 01990 Ortrand (DE); BÖHME, Peter, 01561 Böhla (DE)
(74) Vertreter: Isenbruck, Günter
(86) Internationale Anmeldenummer: PCT/EP2001/010838
(87) Internationale Veröffentlichungsnummer: WO 2002/024612

(56) Entgegenhaltungen:
- EP-A- 0 878 454
- WO-A-96/33231
- PATENT ABSTRACTS OF JAPAN vol. 014, no. 137 (C-0702), 15. März 1990 (1990-03-15) & JP 02 009890 A (YOSHITOMI PHARMACEUT IND LTD), 12. Januar 1990 (1990-01-12)

## Beschreibung

Die Erfindung betrifft ein Verfahren zur Herstellung eines Reinigungsmittels, ein gemäß diesem Verfahren erhaltenes Reinigungsmittel, ein Verfahren zur Entfernung metallischer Verbindungen aus organischen Flüssigkeiten, eine Reinigungsvorrichtung sowie ein Verfahren zur Herstellung der Reinigungsvorrichtung.

Bei der Durchführung technischer Synthesen ist es meist unvermeidlich, daß das Produkt durch gelöste metallische Verbindungen verunreinigt ist. Diese metallischen Verunreinigungen sind meist in ionischer Form gelöst, wobei sie sowohl als reine Metallionen als auch in Verbindung mit anderen Elementen, beispielsweise gebundenem Sauerstoff oder Halogeniden vorliegen können. Diese metallischen Verunreinigungen entstammen unterschiedlichsten Quellen. Sie können bereits mit dem Ausgangsprodukt eingeschleppt werden, aus Katalysatoren oder auch aus Teilen der Reaktionsapparatur, zum Beispiel den Wandungen eines Reaktionsgefäßes herausgelöst worden sein. Meist werden in Abhängigkeit der weiteren Verwendung dieser organischen Flüssigkeiten Spezifikationen festgelegt, die für eine Freigabe der organischen Flüssigkeiten erfüllt werden müssen. Werden die Spezifikationen nicht bereits durch das Rohprodukt erfüllt, muß es weiter gereinigt werden, um so die Konzentration der Verunreinigungen unter die durch die Spezifikation festgelegten Grenzen zu drücken. Ein weiteres Gebiet, in dem die Reinigung organischer Flüssigkeiten von Bedeutung ist, ist die Wiederaufarbeitung gebrauchter organischer Flüssigkeiten für die erneute Verwendung. Unter organischen Flüssigkeiten werden alle organischen Substanzgemische verstanden, die in flüssiger Phase vorliegen, also sowohl reine organische Flüssigkeiten wie auch Gemische aus organischen Flüssigkeiten oder Lösungen.

Für die Abtrennung metallischer Verunreinigungen aus organischen Flüssigkeiten sind bereits eine Reihe von Verfahren entwickelt worden. Diese sind jedoch mit verschiedenen Nachteilen behaftet.

Ein wirksames und sehr verbreitetes Reinigungsverfahren ist die Behandlung der zu reinigenden Flüssigkeiten und Lösungen mit Ionenaustauschern, insbesondere Kationenaustauschern. Es sind bereits eine ganze Reihe leistungsfähiger Kationenaustauscher entwickelt worden. Beispiele sind unter dem Stichwort "Ionenaustauscher" in "RÖMPP Chemielexikon", Georg Thieme-Verlag, beschrieben. Nachteilig bei der Behandlung mit Kationenaustauschern ist, dass für die aufgenommenen Metallionen je nach Form des verwendeten Kationenaustauschers Wasserstoffionen oder Alkalimetallionen, meist Natriumionen an die zu reinigende organische Flüssigkeit abgegeben werden, was zu einer andersartigen, unerwünschten neuen Verunreinigung führt.

In der WO 98/51646 wird die Abtrennung von Schwermetallen, insbesondere von Nickel und Palladium, aus organischen Verbindungen mit Hilfe von Cystin oder N-acyliertem Cystin beschrieben. Cystin und seine Derivate sind jedoch in vielen organischen Verbindungen löslich. Dadurch scheidet eine breite Anwendung dieses Verfahrens aus.

Kato, Kuroda und Itoh, Waseda Daigaku Rikogagu Kenyusho Hokoku 72 **(1976)**, S. 30 - 34 beschreiben die Herstellung festerer Addukte aus Phosphorsäure und verschiedenen Diisocyanaten durch Reaktion in der Schmelze oder in Kerosin. Diese Produkte zeigen jedoch als Folge der Herstellungsmethode sehr wechselnde und uneinheitliche Eigenschaften im Hinblick auf die Entfernung von Metallionen aus organischen Flüssigkeiten.

Eine erste Aufgabe der Erfindung ist es ein Verfahren zur Herstellung eines Reinigungsmittels zur Verfügung zu stellen, mit dem reproduzierbar ein Reinigungsmittel zur Entfernung von gelösten Metallen aus organischen Flüssigkeiten hergestellt werden kann.

Die Aufgabe wird gelöst mit einem Verfahren zur Herstellung eines Reinigungsmittels, wobei eine Phosphorsäure mit mindestens einem Diisocyanat und/oder mindestens einem Polyisocyanat in der Weise in einem Lösungsmittel umgesetzt werden, daß zumindest zeitweise eine homogene Lösung der Phosphorsäure und des Diisocyanats und/oder des Polyisocyanats in dem Lösungsmittel gebildet wird.

Im Gegensatz zu den von Kato, Kuroda und Itho (loc.cit.) beschriebenen Verfahren wird die Umsetzung nicht in fester Phase sondern in Lösung durchgeführt. Um reproduzierbar das Reinigungsmittel herstellen zu können, müssen die Reaktionspartner zumindest kurzfristig in Lösung übergehen. Die Edukte sollten also zunächst vollständig im Lösungsmittel aufgelöst werden. Dabei entsteht eine klare Lösung. Verfärbungen der Lösung oder Trübungen durch Verunreinigungen sind unschädlich. Die Zeitspanne, die zwischen dem Auflösen der Edukte und der Ausbildung eines Niederschlages des Produktes verstreicht, kann sehr kurz gewählt werden. Wesentlich ist, daß die Reaktionspartner, d. h. die Edukte, vollständig in Lösung übergehen können.

Die Auswahl der Di- und/oder Polyisocyanate unterliegt an sich keinen Beschränkungen. Es können sowohl kettenförmige als auch zyklische, gesättigte und ungesättigte Di- bzw. Polyisocyanate verwendet werden, als auch aromatische Verbindungen. Aromatische Di-und/oder Polyisocyanate sind bevorzugt. Besonders bevorzugt sind Toluoldiisocyanate (TDI), Diphenylmethandiisocyanate (MDI), wobei das 4,4'- und/oder das 2,4'- und/oder das 2,2'- Isomere verwendet werden kann, und Polyphenyl-polymethylenpolyisocyanate, wie sie durch Anilin-Formaldehyd-Kondensation und anschließende Phosgenierung (P-MDI) hergestellt werden. Die Di- und Polyisocyanate können sowohl als reine Substanzen als auch als Gemische im erfindungsgemäßen Verfahren eingesetzt werden.

Als Phosphorsäure können Phosphorsäure mit einem Gehalt von 80 - 100 Gew.% oder Mischungen aus Phorsphorsäure und Polyphosphorsäure mit einem Gehalt von 80 - 105 Gew.%, bevorzugt 90 - 100 Gew.-%, berechnet als Phosphorsäure, eingesetzt werden. Orthophosphorsäure ist besonders bevorzugt.

Bevorzugt wird das Lösungsmittel so ausgewählt, daß das Reaktionsprodukt, also das Reinigungsmittel, aus der Lösung ausfällt. Das Lösungsmittel kann dann in einfacher Weise abgetrennt werden, z. B. durch Abdekantieren oder Filtrieren. Das Lösungsmittel kann aber auch abdestiliert werden, beispielsweise auch unter vermindertem Druck.

Um die Herstellung einer homogenen Lösung zu erleichtern ist das Lösungsmittel bevorzugt ein aprotisches Lösungsmittel das vorzugsweise schwach polar bis polar ist, insbesondere eine Dielektrizitätskonstante von > 2,0 aufweist. Unter schwach polaren bzw. polaren Lösungsmitteln werden Lösungsmittel verstanden, welche ein elektrisches Dipolmoment aufweisen.

Beispiele für geeignete Lösungsmittel sind Dioxan, Tetrahydrofuran, Aceton, Methylethylketon, Methylisopropylketon, Diisopropylketon, Essigsäureethylester, Chloressigsäureethylester, Acetonnitril, Chloroform, Diethylether, Glykoldimethylether, Glykoldiethylether, Dimethylformamid, Dimethylacetamid und Dimethylsulfoxid.

Die Reaktion wird vorteilhafter Weise bei einer Temperatur von 20 bis 150°C, bevorzugt von 60 bis 120°C durchgeführt.

Bei Temperaturen unterhalb von 20°C kann eine homogene Lösung nur mit großen Lösungsmittelmengen hergestellt werden. Ferner verläuft die Umsetzung zwischen der Phosphorsäure und dem Di- und/oder Polyisocyanat nur sehr langsam. Bei Temperaturen oberhalb von 150°C sind die Siedepunkte vieler geeigneter Lösungsmittel überschritten und die Reaktion kann nur unter Druck durchgeführt werden. Die Reaktionsführung unter sehr hohen Drücken ist technisch aufwendig und beeinflusst die Wirtschaftlichkeit negativ.

Das mit dem oben beschriebenen Verfahren erhaltene Reinigungsmittel zeigt eine sehr gute Reinigungswirkung bei der Abtrennung von gelösten metallischen Verbindungen aus organischen Flüssigkeiten. Dabei zeigt das Reinigungsmittel einen homogenen Aufbau, d. h. seine Zusammensetzung schwankt nicht über das Volumen des festen Reinigungsmittels. Dadurch steht insbesondere ein Reinigungsmittel zur Verfügung, das eine reproduzierbare und konstante Wirkung bei der Abtrennung von gelösten metallischen Verbindungen aus organischen Flüssigkeiten zeigt. Gegenstand der Erfindung ist daher auch ein Reinigungsmittel, welches mit dem erfindungsgemäßen Verfahren erhältlich ist.

Die Zusammensetzung des Reinigungsmittels kann in weiten Grenzen variiert werden. Bevorzugt werden die Edukte in solchen Mengen eingesetzt, dass sich die Anzahl der NCO-Gruppen des Isocyanates zu den OH-Gruppen der Phosphorsäure wie 1:3 bis 3:1 und besonders bevorzugt wie 1:1,5 bis 1,5:1 verhält.

Eine weitere Aufgabe der Erfindung besteht darin, ein Verfahren zur Abtrennung metallischer Verbindungen aus organischen Flüssigkeiten zur Verfügung zu stellen.

Die Aufgabe wird gelöst mit einem Verfahren zur Abtrennung metallischer Verbindungen aus organischen Flüssigkeiten, wobei eine zy reinigende organische Flüssigkeit mit dem erfindungsgemäßen Reinigungsmittel in Kontakt gebracht wird, wobei eine gereinigte organische Flüssigkeit erhalten wird und die gereinigte organische Flüssigkeit von dem Reinigungsmittel abgetrennt wird. Unter organischen Flüssigkeiten sollen sowohl Lösungsmittel verstanden werden, die im wesentlichen aus nur einer Verbindung bestehen, als auch Lösungsmittelgemische, sowie ferner Lösungen von organischen Verbindungen in organischen Lösungsmitteln.

Das erfindungsgemäße Verfahren besitzt eine sehr breite Anwendbarkeit, insbesondere zur Abtrennung kationischer, metallischer Verbindungen. Unter metallischen Verbindungen sollen sowohl die reinen Metalle, insbesondere in ionischer Form, als auch Verbindungen von Metallen, z. B. mit Sauerstoff in Form oxydischer Verbindungen, verstanden werden. Metalle im Sinne dieser Erfindung sind alle Elemente des Periodensystems der Elemente mit Ausnahme der Elemente Wasserstoff, Helium, Bor, Kohlenstoff, Stickstoff, Sauerstoff, Fluor, Neon, Phosphor, Schwefel, Chlor, Argon, Selen, Brom, Krypton, Jod, Xenon und Radon. Die Aufzählung umfaßt dabei jeweils nur die Elemente in elementarer Form.

Die Dauer des Zeitraums, während dessen die zu reinigende organische Flüssigkeit mit dem erfindungsgemäßen Reinigungsmittel in Kontakt gebracht wird, hängt von der Konzentration der metallischen Verbindungen sowie von den Anforderungen an die Reinheit der gereinigten organischen Flüssigkeit ab.

Das Verfahren kann diskontinuierlich durchgeführt werden, indem das Reinigungsmittel und die zu reinigende organische Flüssigkeit vermischt werden und anschließend das Reinigungsmittel z. B durch Sedimentation, Zentrifugieren oder Filtrieren von der gereinigten organischen Flüssigkeit abgetrennt wird.

Das Verfahren kann auch kontinuierlich durchgeführt werden. Das Reinigungsmittel kann zu diesem Zweck beispielsweise in einer Säule angeordnet werden, durch die die zu reinigende organische Flüssigkeit geführt wird. Das Reinigungsmittel bildet dabei die stationäre und die zu reinigende organische Flüssigkeit die mobile Phase.

Das Verfahren wird bevorzugt in der Weise durchgeführt, daß die zu reinigende organische Flüssigkeit auf eine Temperatur von 20 bis 150°C, vorzugsweise von 60 bis 120°C erwärmt ist. Bei Temperaturen unter 20°C nimmt die Viskosität mancher organischer Flüssigkeiten stark zu, was den Reinigungsvorgang und die Abtrennung des Reinigungsmittels zusätzlich erschwert. Bei niedrigen Temperaturen können auch manche organische Flüssigkeiten vom flüssigem in den festen Aggregatzustand übergehen (erstarren). Bei Temperaturen oberhalb von 150°C sind die Siedepunkte vieler geeigneter Lösungsmittel überschritten und die Reinigung kann nur unter Druck durchgeführt werden. Die Reinigung unter sehr hohen Drücken ist technisch aufwendig und beeinflusst die Wirtschaftlichkeit negativ, wie auch der Energieverbrauch zum Aufheizen und abschließendem Kühlen der zu reinigenden Flüssigkeit. Besonders vorteilhaft ist es, die Reinigung etwa bei der Temperatur durchzuführen, bei der die zu reinigende Flüssigkeit in der vorherigen Prozessstufe anfällt oder in der nachfolgenden Prozessstufe benötigt wird.

Die Reinigungswirkung kann erhöht werden, wenn das Gemisch aus Reinigungsmittel und zu reinigender organischer Flüssigkeit Wasser enthält. Die Wassermenge beträgt dabei bevorzugt, bezogen auf das Gewicht der zu reinigenden Flüssigkeit, 0,05 bis 5%.

Weiterhin ist Gegenstand der Erfindung eine Reinigungsvorrichtung, umfassend eine Form, welche eine Beschichtung aus dem erfindungsgemäßen Reinigungsmittel aufweist. Die Form kann in beliebiger Gestalt ausgeführt werden, wobei die Gestalt entsprechend der gewünschten Anwendung ausgewählt wird. So kann die Form als Behälter oder Rohr ausgeführt sein, wobei deren Innenwände mit dem Reinigungsmittel beschichtet sind. Eine weitere denkbare Möglichkeit sind Füllkörper, Kolonnen und Säuleneinbauten, die jeweils mit dem Reinigungsmittel beschichtet sind. Ferner können auch pulverförmige oder körnige Materialien, wie z. B. Quarzsand, Quarzmehl, Kieselgur, Glasmehl oder Kaolin mit dem Reinigungsmittel beschichtet sein.
Ein weiterer Gegenstand der Erfindung betrifft ein Verfahren zur Herstellung der oben beschriebenen Reinigungsvorrichtung. Dabei wird eine Form, welche eine bestimmte Gestalt aufweist, mit dem erfindungsgemäßen Reinigungsmittel beschichtet.
Die Formen, die mit dem Reinigungsmittel beschichtet werden sollen, entsprechen den oben beschriebenen Formen. Die Beschichtung kann in der Weise ausgeführt werden, daß zum Beispiel die Form zusammen mit dem Lösungsmittel, der Phosphorsäure und dem Di-und/oder Polyisocyanat in ein geeignetes Reaktionsgefäß gegeben wird, so daß sich das Reinigungsmittel auf der Form abscheidet. Sollen Behälter- oder Rohrinnenwände ausgekleidet werden, läßt sich das Verfahren zur Herstellung des Reinigungsmittel direkt in dem Behälter bzw. dem Rohr durchführen, wobei das Reinigungsmittel auf den Innenwänden abgeschieden wird. Es ist jedoch auch möglich, das pulverförmige Reinigungsmittel zusammen mit einem geeigneten Haftvermittler auf die Form aufzubringen.

Die Erfindung wird anhand von Beispielen näher erläutert

### Ausführungsbeispiel 1

In einem Rundkolben mit einem Volumen von 11, der mit einem Rückflußkühler versehen ist, werden 300 ml über Molekularsieb A4 getrocknetes Dioxan, 75,0 g 4,4'-Diphenylmethandiisocyanat und 21,9 g Orthophosphorsäure über einen Zeitraum von 2 Std. zum Sieden erhitzt. Unmittelbar nach Erreichen der Siedetemperatur entsteht eine klare, schwach gelb gefärbte Lösung, aus der sich nach kurzer Zeit am Kolbenboden ein Feststoff abscheidet. Nach Abkühlen auf Raumtemperatur wird das Lösungsmittel vom Bodenkörper abgegossen. In den Kolben werden erneut 300 ml über Molekularsieb A4 getrocknetes Dioxan eingeführt und über einen Zeitraum von 1 Std. zum Sieden erhitzt. Das Lösungsmittel wird erneut abgegossen und der verbleibende Festkörper in einen Filterhichter überführt, 3 mal mit je 20 ml tert.-Butylmethylether gewaschen, im Mörser zerkleinert und im Vakuum getrocknet.
Es werden 80,0 g eines gelben Pulvers erhalten.
Elementaranalyse:
C: 45,6 %, H: 5,5 %, N: 5,8 %, P: 8,3 %.

### Ausführungsbeispiel 2

In einem Rundkolben mit einem Volumen von 250 ml, der mit einem Rückflußkühler versehen ist, werden 50 ml über Molekularsieb A4 getrocknetes Dioxan, 17,4 g Toluylendiisocyanat (Isomerengemisch aus 80 % des 2,4 Isomeren und 20 % des 2,6 - Isomeren) und 5,28 g Orthophosphorsäure über einen Zeitraum von 2 Std. zum Sieden erhitzt. Unmittelbar nach Erreichen der Siedetemperatur entsteht eine klare schwach gelb gefärbte Lösung, aus der sich nach kurzer Zeit am Kolbenboden ein Feststoff abscheidet. Nach Abkühlen auf Raumtemperatur wird das Lösungsmittel vom Bodenkörper abgegossen. In den Kolben werden erneut 50 ml über Molekularsieb A4 getrocknetes Dioxan eingefüllt und über einen Zeitraum von 1 Std. zum Sieden erhitzt. Das Lösungsmittel wird erneut abgegossen und der verbleibende Festkörper in einen Filtertrichter überführt, 3 x mit je 10 ml tert. Butylmethylether gewaschen, im Mörser zerkleinert und im Vakuum getrocknet
Es wurden 21,0 g eines farblosen Pulvers erhalten.
Elementaranalyse:
C: 48,4 %, H: 5,8 %, N: 12,0 %, P: 6,8 %.

### Ausführungsbeispiel 3

Es wird wie im Ausführungsbeispiel 2 verfahren, jedoch werden statt 5,28 g Orthophosphorsäure jetzt 7,92 g Orthophosphorsäure eingesetzt.
Es werden 23,8 g eines farblosen Pulvers erhalten.

### Elementaranalyse:

C: 44,9 %, H: 5,7 %, N: 11,0 %, P: 9,3 %.

### Ausführungsbeispiel 4

Es wird wie im Ausführungsbeispiel 2 verfahren, jedoch werden statt 17,4 g Toluylendiisocyanat jetzt 16,8 g Hexamethylendiisocyanat und anstatt 5,28 g Orthophosphorsäure jetzt 6,6 g Orthophosphorsäure eingesetzt.
Es werden 15,1 g eines farblosen Pulvers erhalten.

### Elementaranalyse:

C: 36,5 %, H: 7,7 %, N: 9,6 %, P: 14,0 %.

### Ausführungsbeispiel 5

Es wird wie im Ausführungsbeispiel 2 verfahren, jedoch werden statt 17,4 g Toluylendiisocyanat jetzt 27,0 g Polyphenylpolymethylenpolyisocyanat (Äquivalentgewicht 135 g) und statt 5,28 g Orthophosphorsäure jetzt 6,6 g Orthophosphorsäure eingesetzt.
Es werden 17,4 g eines gelben Pulvers erhalten.

### Elementaranalyse:

C: 48,9 %, H: 5,3 %, N: 6,5%, P: 10,8 %.

### Ausführungsbeispiel 6

Es wird wie im Ausführungsbeispiel 5 verfahren, jedoch werden statt 6,6 g Orthophosphorsäure jetzt 3,3 g 85 %-ige Phosphorsäure und 3,3 g 115 %-ige Polyphosphorsäure eingesetzt.
Es werden 21,2 g eines gelben Pulvers erhalten.

### Elementaranalyse:

C: 55,8 %, H: 5,4 %, N: 8,4%, P: 6,9 %.

### Vergleichsbeispiel

Das Vergleichsbeispiel beschreibt die Umsetzung von Orthophosphorsäure mit Diphenylmethandiisocyanat ohne Verwendung von Lösungsmittel entsprechend Kato et al (loc. cit.)

In einem Rundkolben mit einem Volumen von 250 ml, der mit einem Rückflußkühler und einem Rührer versehen ist, werden 75,0 g Diphenylmethandiisocyanat und 21,9 g Orthophosphorsäure bei 60°C geschmolzen und intensiv vermischt. Danach wird das sich verfestigende Produkt über einen Zeitraum von 2 Std. bei einer Temperatur von 130°C gehalten. Nach Abkühlung auf Raumtemperatur werden 300 ml über Molekularsieb A4 getrocknetes Dioxan eingefüllt und über einen Zeitraum von 1 Std. zum Sieden erhitzt. Das Lösungsmittel wird abgegossen und der verbleibende Festkörper in einen Filtertrichter überführt, 3 x mit je 20 ml tert. Butylmethylether gewaschen, im Mörser zerkleinert und im Vakuum getrocknet.

Es wird ein gelbes Pulver erhalten, das deutliche Anteile von Inhomogenitäten in Form von braunen verklumpten Teilchen enthält.

### Ausführungsbeispiel 7

Dieses Beispiel beschreibt die Herstellung des Reinigungsmittels auf einem Trägermaterial.
In einem Dreihalskolben mit einem Volumen von 1 1, der mit einem Destillationsaufsatz, einem Rührer und einem Thermometer versehen ist, werden 600 ml über Molekularsieb A4 getrocknetes Dioxan und 90 g bei 110°C getrockneter Kieselgur unter Rühren suspendiert und anschließend 100 ml Dioxan abdestilliert. Nach Abkühlen auf 80°C wird der Destillationsaufsatz gegen einen Rückflußkühler ersetzt und dem Kolbeninhalt 10,0 g Rohprodukt des Diphenylmethandiisocyanat (Äquivalentgewicht 135 g) und 2,0 g Orthophosphorsäure zugefügt und der Kolbeninhalt unter Rühren unter Rückfluß 5 Std. zum Sieden erhitzt. Nach Abkühlen auf Raumtemperatur wird das Lösungsmittel abfiltriert und der Filterrückstand 3 mal mit je 20 ml tert. Butylmethylether gewaschen. Der Filterrückstand wird im Vakuum getrocknet
Es werden 98,5 g eines hellgelben Pulvers erhalten.
Elementaranalyse:
C: 5,5 %, H: 0,7 %, N: 0,7%, P: 0,25 %

### Ausführungsbeispiele 8 - 12

In einem Erlenmeyerkolben mit einem Inhalt von 250 ml werden jeweils 250 ml Toluol, das 14,7 ppm Kalium, 6,2 ppm Zinn und 5,5 ppm Eisen gelöst enthält mit je 1 g der Reinigungsmittel nach Ausführungsbeispiel 1, 2, 4, 5 und 6 für 1 Std. bei 60°C gerührt. Anschließend wird vom Reinigungsmittel abfiltriert und die noch im Filtrat enthaltenen Restmengen der Elemente Kalium, Zinn und Eisen mit Hilfe von Atomabsorptionsspetroskopie (AAS) bestimmt. Die Ergebnisse sind in Tabelle 1 aufgeführt.

**Tabelle 1**

| Ausführungsbeispiel | Reinigungsmittel nach | Kalium (ppm) | Zinn (ppm) | Eisen (ppm) |
|---|---|---|---|---|
| 8 | Ausführungsbeispiel 1 | <2*) | <1*) | 0,6 |
| 9 | Ausführungsbeispiel 2 | <2*) | <1*) | <0,5*) |
| 10 | Ausführungsbeispiel 4 | <2*) | <1*) | 0,7 |
| 11 | Ausführungsbeispiel 5 | <2*) | <1*) | 2,3 |
| 12 | Ausführungsbeispiel 6 | <2*) | <1*) | 0,8 |

| | | | | |
|---|---|---|---|---|
| *) = Nachweisgrenze | | | | |

### Ausführungsbeispiele 13

In einem Rundkolben mit einem Inhalt von 250 ml werden jeweils 100 ml eines Polyethertoluols (Lupranol® 2080, Molmasse rd. 3.000 g/mol, BASF AG, Ludwigshafen, DE) das 0,25 Gew.% Kaliumhydroxid enthält für einer Stunde bei 90°C mit verschiedenen Mengen des Reinigungsmittels nach Ausführungsbeispiel 1 gerührt. Danach wird vom Reinigungsmittel abfiltriert und die noch im Filtrat enthaltenen Restmengen des Elementes Kalium durch Atomabsorptionsspetroskopie (AAS) bestimmt. Bei Versuch 12-4 wurde zusätzlich 1 Gew.% Wasser gemeinsam mit dem Reinigungsmittel in das Polyetherpolyol eingebracht und nach der Filtration durch Destillation wieder entfernt. Weiterhin wurde der Säuregehalt des Polyetherpolyols nach Abtrennung des Reinigungsmittels überprüft. Die Ergebnisse sind in Tabelle 2 aufgeführt.

**Tabelle 2**

| Ausführungsbeispiel | Reinigungsmittel nach | Menge Reinigungsmittel | Menge Wasser | Kalium (ppm) | Säurezahl (mg KOH/g) |
|---|---|---|---|---|---|
| 13-1 | Ausführungsbeispiel 1 | 1 Gew.% | Ohne | 260 | <0,001* |
| 13-2 | Ausführungsbeispiel 1 | 2 Gew.% | Ohne | 72 | <0,001* |
| 13-3 | Ausführungsbeispiel 1 | 3 Gew.% | Ohne | 21 | <0,001* |
| 13-4 | Ausführungsbeispiel 1 | 1 Gew.-% | 1 Gew-% | 2 | <0,001* |

| | | | | | |
|---|---|---|---|---|---|
| *) = Nachweisgrenze | | | | | |

### Ausführungsbeispiele 14

In einem Rundkolben mit einem Inhalt von 250 ml werden je 100 ml eines Polyetherpolyols, (Lupranol® 2080, Molmasse rund 3000 g/mol) das genau 50 ppm Kaliumhydroxid gelöst enthält, 1 Stunde bei 90°C mit verschiedenen Mengen des Reinigungsmittels nach Ausführungsbeispiel 1 gerührt. Danach wird vom Reinigungsmittel abfiltriert und die noch im Filtrat enthaltenen Restmengen des Elementes Kalium durch Atomabsorptionsspektroskopie (AAS) bestimmt Weiterhin wurde der Säuregehalt des Polyetherpolyols nach Abtrennen des Reinigungsmittels überprüft. Die Ergebnisse sind in Tabelle 3 aufgeführt.

**Tabelle 3**

| Ausführungsbeispiel | Reinigungsmittel nach | Menge Reinigungsmittel | Menge Wasser | Kalium (ppm) | Säurezahl (mg KOH/g) |
|---|---|---|---|---|---|
| 14-1 | Ausführungsbeispiel 1 | 0,5 Gew.-% | Ohne | 3,4 | 0,035 |
| 14-2 | Ausführungsbeispiel 1 | 1,0 Gew.-% | Ohne | 1,2 | 0,049 |
| 14-3 | Ausführungsbeispiel 1 | 1,5 Gew.-% | Ohne | <0,5* | 0,047 |

| | | | | | |
|---|---|---|---|---|---|
| *) = Nachweisgrenze | | | | | |

### Ausführungsbeispiele 15

In einem Rundkolben mit einem Inhalt von 250 ml werden je 100 ml eines Polyetherpolyols (Lupranol® 2080, Molmasse rund 3000 g/mol), das verschiedene Konzentrationen von Kaliumhydroxid enthält, eine Stunde bei 90°C mit verschiedenen Mengen des Reinigungsmittels nach Ausführungsbeispiel 7 gerührt. Danach wird vom Reinigungsmittel abfiltriert und die noch im Filtrat enthaltenen Restmengen des Elementes Kalium durch Atomabsorptionsspektroskopie (AAS) bestimmt. Bei Versuch 15-2 wurde zusätzlich 1 Gew.-% Wasser gemeinsam mit dem Reinigungsmittel in das Polyetherpolyol eingebracht und nach der Filtration durch Destillation wieder entfernt. Weiterhin wurde der Säuregehalt des Polyetherpolyols nach Abtrennen des Reinigungsmittels überprüft. Die Ergebnisse sind in Tabelle 4 aufgeführt.

**Tabelle 4**

| Ausführungsbeispiel | Reinigungs mittel nach | KOH-Ausgangskonzentration | Menge Reinigungs mittel | Menge Wasser | Kalium (ppm) | Säurezahl (mg KOH/g) |
|---|---|---|---|---|---|---|
| 15-1 | Ausführungs beispiel 7 | 2000 ppm | 2 Gew.-% | Ohne | 2050 | <0,001* |
| 15-2 | Ausführungs beispiel 7 | 2000 ppm | 2 Gew.-% | 2 Gew.-% | 4,0 | 0,003 |
| 15-3 | Ausführungs beispiel 7 | 50 ppm | 1 Gew.-% | Ohne | 0,7 | 0,018 |

| | | | | | | |
|---|---|---|---|---|---|---|
| *) = Nachweisgrenze | | | | | | |

## Patentansprüche

1. Verfahren zur Herstellung eines Reinigungsmittels, wobei eine Phosphorsäure mit mindestens einem Diisocyanat und/oder mindestens einem Polyisocyanat in der Weise in einem Lösungsmittel umgesetzt wird, daß zumindest zeitweise eine homogene Lösung der Phosphorsäure und des Diisocyanats und/oder des Polyisocyanats in dem Lösungsmittel gebildet wird.

2. Verfahren nach Anspruch 1, wobei nach der Umsetzung das Lösungsmittel von dem Reinigungsmittel abgetrennt wird.

3. Verfahren nach Anspruch 1 oder 2, wobei das Lösungsmittel ein aprotisches Lösungsmittel ist, dass eine Di-elektrizitätskonstante von >2,0 aufweist.

4. Verfahren nach einem der Ansprüche 1 - 3, wobei die Umsetzung bei einer Temperatur im Bereich von 20 bis 150°C durchgeführt wird.

5. Reinigungsmittel erhältlich nach einem Verfahren gemäß einem der Ansprüche 1 - 4.

6. Verfahren zur Abtrennung metallischer Verbindungen aus organischen Flüssigkeiten, wobei eine zu reinigende organische Flüssigkeit mit dem Reinigungsmittel gemäß Anspruch 5 in Kontakt gebracht wird, wobei eine gereinigte organische Flüssigkeit erhalten wird, und die gereinigte organische Flüssigkeit von dem Reinigungsmittel abgetrennt wird.

7. Verfahren nach Anspruch 6, wobei die zu reinigende organische Flüssigkeit auf eine Temperatur von 20 bis 150°C erwärmt ist.

8. Verfahren nach Anspruch 6 oder 7, wobei das Gemisch aus Reinigungsmittel und zu reinigender organischer Flüssigkeit Wasser in einer Menge von, bezogen auf das Gewicht der zu reinigenden organischen Flüssigkeit, 0,05 bis 5 % enthält.

9. Reinigungsvorrichtung, umfassend eine Form, welche eine Beschichtung aus dem Reinigungsmittel gemäß Anspruch 5 aufweist.

10. Verfahren zur Herstellung der Reinigungsvorrichtung gemäß Anspruch 9, wobei eine Form, welche eine bestimmte Gestalt aufweist, mit einem Reinigungsmittel gemäß Anspruch 5 beschichtet wird.

## Claims

1. A process for the preparation of a purifying composition, wherein a phosphoric acid is reacted with at least one diisocyanate and/or at least one polyisocyanate in a solvent in a manner such that a homogeneous solution of the phosphoric acid and of the diisocyanate and/or of the polyisocyanate is formed at least temporarily.

2. A process as claimed in claim 1, wherein the solvent is separated off from the purifying composition after the reaction.

3. A process as claimed in claim 1 or 2, wherein the solvent is an aprotic solvent that has a dielectric constant of > 2.0.

4. A process as claimed in any of claims 1-3, wherein the reaction is carried out at 20 to 150°C.

5. A purifying composition obtainable by a process as claimed in any of claims 1 - 4.

6. A process for separating metal compounds from organic liquids, wherein an organic liquid to be purified is brought into contact with the purifying composition as claimed in claim 5, wherein a purified organic liquid is obtained, and the purified organic liquid is separated from the purifying composition.

7. A process as claimed in claim 6, wherein the organic liquid to be purified is heated to a temperature of from 20 to 150°C,.

8. A process as claimed in claim 6 or 7, wherein the mixture of purifying composition and organic liquid to be purified comprises water in an amount of from 0.05 to 5% based on the weight of the organic liquid to be purified.

9. A purification apparatus, comprising a form which has a coating of a purifying composition as claimed in claim 5.

10. A process for the production of a purification apparatus as claimed in claim 9, wherein a form which as a specific shape is coated with a purifying composition as claimed in claim 5.

## Revendications

1. Procédé de préparation d'un agent d'épuration, dans lequel on amène à réagir dans un solvant un acide phosphorique avec au moins un diisocyanate et/ou au moins un polyisocyanate de façon à former au moins de manière temporaire une solution homogène de l'acide phosphorique et du diisocyanate et/ou du polyisocyanate dans le solvant.

2. Procédé suivant la revendication 1, dans lequel, après la réaction, le solvant est isolé de l'agent d'épuration.

3. Procédé suivant la revendication 1 ou 2, dans lequel le solvant est un solvant aprotique qui présente une constante diélectrique >2,0.

4. Procédé suivant l'une des revendications 1 à 3, dans lequel la réaction est effectuée à une température de l'ordre de 20 à 150°C.

5. Agent d'épuration que l'on peut obtenir suivant un procédé selon l'une des revendications 1 à 4.

6. Procédé d'isolement de composés métalliques à partir de liquides organiques, dans lequel un liquide organique à épurer est amené en contact avec l'agent d'épuration suivant la revendication 5, un liquide organique épuré étant obtenu, et le liquide organique épuré est isolé de l'agent d'épuration.

7. Procédé suivant la revendication 6, dans lequel le liquide organique à épurer est chauffé à une température de 20 à 150°C.

8. Procédé suivant la revendication 6 ou 7, dans lequel le mélange d'agent d'épuration et de liquide organique à épurer contient de l'eau en une quantité de 0,05 à 5 %, par rapport au poids du liquide organique à épurer.

9. Dispositif d'épuration, comportant une forme qui présente une enduction à base d'agent d'épuration suivant la revendication 5.

10. Procédé de préparation du dispositif d'épuration suivant la revendication 9, dans lequel une forme, qui présente une configuration déterminée, est enduite d'un agent d'épuration suivant la revendication 5.
